# EUROPÄISCHE PATENTSCHRIFT

(11) **EP 1 334 896 B1**
(45) Veröffentlichungstag und Bekanntmachung des Hinweises auf die Patenterteilung: **07.12.2005**
(21) Anmeldenummer: 03000306.5
(22) Anmeldetag: 09.01.2003
(51) Int. Cl.: B62D 1/12

(54) **Bedienelement für ein Stellorgan mit einer Vorrichtung zur Kraftrückkopplung**
Operational control element for a control unit with device for a force feedback system
Elément de réglage pour un actionneur avec un dispositif pour un système de rétro-action

(30) Priorität: 07.02.2002 DE 10205041
(43) Veröffentlichungstag der Anmeldung: 13.08.2003
(73) Patentinhaber: Bayerische Motoren Werke Aktiengesellschaft, 80809 München (DE)
(72) Erfinder: Schmidt, Roland, 82131 Stockdorf (DE); Faulstroh, Hans-Joachim, 86938 Schondorf am Ammersee (DE)

(56) Entgegenhaltungen:
- EP-A- 0 659 639
- DE-A- 10 051 187
- DE-A- 19 836 679
- DE-A- 19 916 434
- US-A- 6 109 133

## Beschreibung

Die Erfindung betrifft ein Bedienelement für ein Stellorgan mit einer Vorrichtung zur Kraftrückkopplung, insbesondere für ein Kraftfahrzeug. Zum technischen Umfeld wird beispielshalber auf die EP 0 759 585 B1 oder die DE 199 16 434 A1 verwiesen. Das Dokument DE 10051187 A *-* das den nähestliegenden Stand der Technik darstellt-offenbart die Merkmale des Oberbegriffes aus Anspruch 1.

Im Kraftfahrzeugbau finden die sog. "drive-by-wire"-Systeme verstärkte Anwendung, bei denen der Fahrzeugführer mittels eines Bedienelementes seinen Fahrwunsch vorgibt, der dann von einem zumeist elektrischen Stellorgan umgesetzt wird. Beispiele hierfür sind das Fahrzeug-Lenksystem, ein Getriebe-Gangwechsel-System oder eine (Feststell-)Bremse des Fahrzeugs, bei denen das Bedienelement üblicherweise als Hand-Bedienelement ausgeführt ist, oder ein Fahrpedal oder ein Bremspedal, mit denen eine positive oder negative Fzg.-Längsbeschleunigung vorgegeben wird und die üblicherweise als Fuß-Bedienelement ausgeführt sind. Dabei ist die vorliegende Erfindung nicht auf diese genannte Zuordnung beschränkt; vielmehr kann eine Fzg.-Bremsanlage auch mittels eines Hand-Bedienelements betätigt werden, ebenso wie ein Fzg.-Lenksystem mittels eines Fuß-Bedienelement angesteuert werden kann. Grundsätzlich bezieht sich die vorliegende Erfindung auf jedwedes Bedienelement nach dem Oberbegriff des Anspruchs 1.

Nachdem - zurückkommend auf die "drive-by-wire-Systeme" von Kraftfahrzeugen - die genannten Bedienelemente dann nicht mehr direkt mechanisch mit dem jeweiligen Stellorgan verbunden sind, steht zu einer ausgeführten Betätigung des Bedienelements zunächst keine Kraft-Rückmeldung bereit, die jedoch grundsätzlich wünschenswert ist. Schließlich möchte der Fahrzeug-Führer die Reaktion auf eine ausgeführte Betätigung des Bedienelements spüren. Beispielsweise soll bei einem starken Lenkrad-Einschlag eine größere Gegenkraft erzeugt werden als bei einem nur geringfügigen Verdrehen des Lenkrads. Vergleichbares gilt für die anderen beispielhaften genannten Bedienelemente eines Kraftfahrzeugs und kann allgemein für Bedienelemente, die mechanisch entkoppelt auf ein Stellorgan einwirken, gelten, so dass die vorliegende Erfindung nicht auf den Anwendungsfall eines Kraftfahrzeugs beschränkt ist.

Um auch bei einem mechanisch vom Stellorgan entkoppelten Stellorgan-Bedienelement eine im vorhergehenden Absatz geschilderte Kraft-Rückmeldung, auch Kraftrückkopplung oder force-feedback genannt, bzw. eine entsprechende Weg-Rückmeldung über einer Betätigung des Bedienelements zu erzielen, ist es bekannt, hierfür am Bedienelement direkt oder indirekt eine sog. Vorrichtung zur Kraftrückkopplung angreifen zu lassen, die eben diese Kraft-Rückmeldung liefert. Zumeist kann diese Vorrichtung zur Kraftrückkopplung einer Betätigung des Bedienelementes eine variable Kraft entgegensetzen. Dabei kann diese Vorrichtung durch einen Elektromotor mit einem geeigneten nachgeschalteten Getriebe gebildet werden, wobei durch geeignete Ansteuerung des Elektromotors die jeweils gewünschte Kraft-Rückmeldung erzeugt werden kann.

Bislang werden derartige Vorrichtungen zur Kraftrückkopplung auf die maximal benötigte Rückmeldungs-Kraft hin ausgelegt. Ist es also bspw. erforderlich, dass eine betragsmäßig sehr hohe Rückmeldungs-Kraft bereit gestellt werden kann, so ist hierfür bspw. ein sehr leistungsstarker Elektromotor sowie ein entsprechend dimensioniertes Getriebe erforderlich, was einen hohen Aufwand an Material, Kosten und Gewicht zur Folge haben kann. Entsprechendes gilt für andersartig ausgeführte Kraftrückkopplungs-Vorrichtungen, die für eine Vielzahl von Betätigungsvorgängen am Bedienelement lediglich relativ geringe Gegenkräfte erzeugen müssen, jedoch daneben in speziellen Fällen auch überproportional hohe Gegenkräfte, und die demzufolge auf die Bereitstellung derart hoher Kräfte hin ausgelegt sein müssen.

Ein möglicher Beispielfall für den im vorhergehenden Absatz geschilderten Sachverhalt stellt (abermals) ein "steer-by-wire"-(Lenk)-System eines Kraftfahrzeugs dar, bei welchem für übliche Lenkrad-Einschläge während einer Fahrt des Fahrzeugs relativ geringe Gegenkräfte erzeugt werden müssen, während jedoch bspw. dann, wenn das Fahrzeug aus einer Parklücke herausrangiert werdend soll und dabei ein gelenktes FahrzeugRad gegen einen Bordstein stößt, eine besonders hohe Gegenkraft an das Bedienelement, d.h. an das Lenkrad oder dgl. angelegt werden soll.

Hiermit soll nun aufgezeigt werden, wie eine nicht besonders vorteilhafte Überdimensionierung einer Vorrichtung zur Kraftrückkopplung an ein Bedienelement nach dem Oberbegriff des Anspruchs 1 vermieden werden kann und dennoch (insbesondere für spezielle Anwendungsfälle) eine gegenüber der üblichen Gegenkraft wesentlich höhere Gegenkraft am Bedienelement bereitgestellt werden kann (= Aufgabe der vorliegenden Erfindung). Es soll also möglich sein, eine betragsmäßig hohe Gegenkraft bereit zu stellen, ohne dass die Vorrichtung zur Kraftrückkopplung auf die Bereitstellung derart hoher Kräfte hin ausgelegt ist. Die Aufgabe wird durch die Kombination der Merkmale von Anspruch 1 gelöst.

Erfindungsgemäß ist somit neben der Vorrichtung zur Kraftrückkopplung eine zusätzliche Vorrichtung oder Einrichtung vorgesehen, mittels derer das Bedienelement nahezu blockiert werden kann oder zumindest soweit belastet werden kann, dass dessen Freigängigkeit nennenswert eingeschränkt wird. Mit einer üblichen, weiterhin vorgesehenen Kraftrückkopplungs-Vorrichtung müssen somit nur die quasi üblichen Betriebsfälle abgedeckt werden, in denen sich die zu erzeugende Gegenkraft innerhalb gewisser Grenzen bewegt; in besonderen Betriebszuständen hingegen, in denen deutlich höhere Gegenkräfte benötigt werden, wird die genannte zusätzliche Vorrichtung, nämlich die sog. Behinderungseinrichtung wirksam. Damit kann die Kraftrückkopplungs-Vorrichtung relativ schwach dimensioniert werden, was im Hinblick auf Kosten, Gewicht, Leistungsaufnahme, aber auch Funktion usw. vorteilhaft ist, während für das Erzeugen besonders hoher Gegenkräfte eine eigenständige sog. Behinderungsvorrichtung vorgesehen ist, die dafür relativ einfach ausgebildet sein kann.

Wie bereits weiter oben erwähnt wurde, kann insbesondere in Verbindung mit einem Hand-Bedienelement für ein Fahrzeug-Lenksystem die Vorrichtung zur Kraftrückkopplung einen Elektromotor mit Getriebe aufweisen und eine variable Gegenkraft aufbringen, deren Maximalbetrag nennenswert niedriger ist als die durch die Behinderungseinrichtung aufbringbare Gegenkraft. Eine relativ hohe durch die Behinderungseinrichtung erzeugte Gegenkraft kann somit einer Bedienperson dahingehend eine Rückmeldung geben, dass eine weitere Auslenkung des Bedienelementes in die eingeschlagene Richtung möglichst unterlassen werden sollte.

Grundsätzlich bestehen die unterschiedlichsten Möglichkeiten für die Ausbildung bzw. Gestaltung der sog. Behinderungseinrichtung. Relativ einfach realisierbar ist diese in Form eines schaltbaren Dämpfers, d.h. als angekoppelter Bewegungsdämpfer mit stark veränderbarer Dämpfungskraft.

Wenn lediglich geringe Gegenkräfte benötigt werden, so werden diese wie üblich im wesentlichen alleine von der Kraftrückkopplungs-Vorrichtung aufgebracht, während der angekoppelte Dämpfer nahezu frei mitläuft und allenfalls eine geringe zusätzliche Gegenkraft erzeugt. Wird jedoch eine relativ hohe Gegenkraft benötigt, so wird der Bewegungsdämpfer auf maximale Dämpfungswirkung geschaltet und stellt somit (auf einfache Weise) ein erhebliches zusätzliches Hindernis bei einer Betätigung des Bedienelements dar.
Vorteilhafterweise kann ein angekoppelter Bewegungsdämpfer gleichzeitig als Sicherheitselement fungieren, falls die Kraftrückkopplungs-Vorrichtung ausfallen und somit unwirksam sollte. Dann kann zumindest der Bewegungsdämpfer noch eine geringe Gegenkraft an das Bedienelement bei dessen Betätigung anlegen.

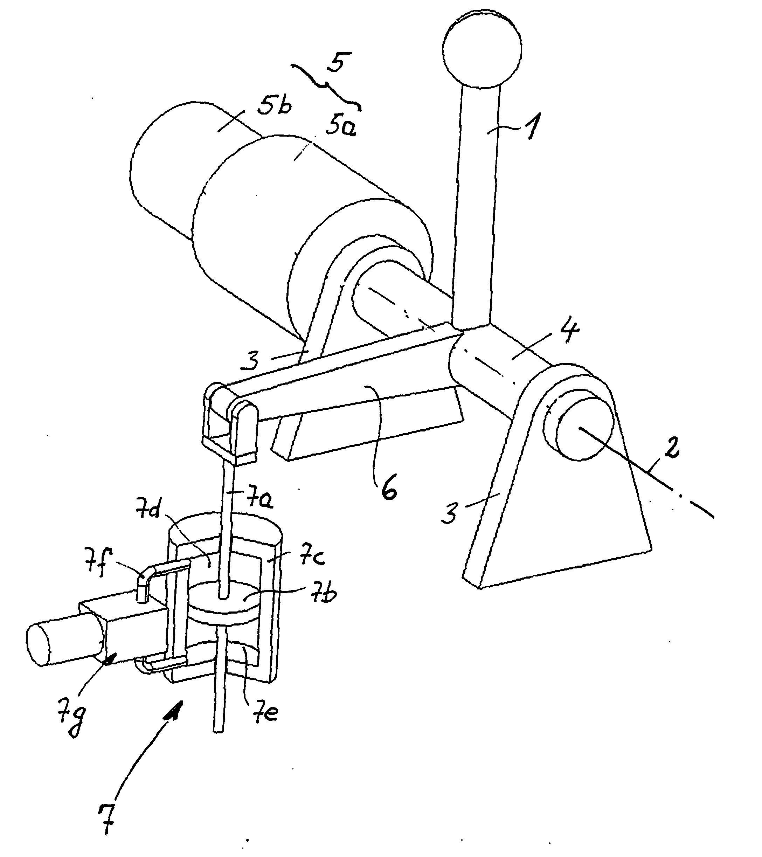

In einer bevorzugten Ausführungsform der Erfindung ist vorgesehen, dass ein über einen Hebel letztlich mit dem Bedienelement verbundener Dämpferkolben des Bewegungsdämpfers zwei im Dämpferzylinder vorgesehene Dämpferkammern voneinander trennt, die unter Zwischenschaltung eines variablen Strömungswiderstandes hydraulisch miteinander verbunden sind, wie auch aus der folgenden Beschreibung des in der beigefügten einzigen Figur stark vereinfacht dargestellten bevorzugten Ausführungsbeispiels der Erfindung hervorgeht.

Mit der Bezugsziffer 1 ist ein Bedienelement bezeichnet, das hier als Bedienhebel ausgeführt ist, der bzw. das um eine Achse 2 verschwenkbar ist. Längs dieser Achse 2 läuft eine mit dem Bedienhebel 1 bzw. Bedienelement 1 verbundene und in Lagern 3 gelagerte Welle 4, die an die (nicht sichtbare) Abtriebswelle eines Getriebes 5a angeflanscht ist, dessen Eingangswelle von einem Elektromotor 5b angetrieben wird. Dieser Elektromotor 5b bildet zusammen mit dem Getriebe 5a eine Vorrichtung 5 zur Kraftrückkopplung an das Bedienelement 1, d.h. durch geeignete Ansteuerung dieser Kraftrückkopplungs-Vorrichtung 5 bzw. des Elektromotors 5b kann einer Betätigung des Bedienelements 1 durch eine Bedienperson - diese verschwenkt dabei den Bedienhebel 1 um die Achse 2 - eine gewünschte Gegenkraft entgegengesetzt werden.

An der das Bedienelement 1 tragenden Welle 4 ist weiterhin ein Hebel 6 befestigt, an dessen freiem Ende gelenkig die Kolbenstange 7a eines Dämpferkolbens 7b angelenkt ist, der in einem Dämpferzylinder 7c längsverschieblich geführt ist, wobei hier oberhalb sowie unterhalb (allgemein beidseitig) des Dämpferkolbens 7b mit einem geeigneten Hydraulikmedium befüllte Dämpferkammern 7d, 7e im Dämpferzylinder 7c gebildet sind. Die soeben genannten Elemente mit den Bezugsziffern 7a,b,c,... bilden somit einen Bewegungsdämpfer 7 für den Hebel 6 und somit (über die Welle 4) ebenfalls für das Bedienelement 1.

Die beiden Dämpferkammern 7d, 7e des Dämpferzylinders 7 sind über eine Leitung 7f hydraulisch miteinander verbunden. In dieser Leitung 7f ist ein variabler Strömungswiderstand 7g für das genannte Hydraulikmedium, bspw. in Form eines Druckregelventils, angeordnet. Wenn dieser Strömungswiderstand 7g einen sehr geringen Wert annimmt, so setzt der Bewegungsdämpfer 7 einer Verschwenkbewegung des Bedienhebels 1 um die Achse 2 lediglich einen sehr geringen Widerstand entgegen, d.h. an das Bedienelement 1 wird vom Bewegungsdämpfer 7 dann nur eine geringe Gegenkraft angelegt. Nimmt hingegen der Strömungswiderstand 7g durch geeignete Ansteuerung einen sehr hohen Wert an, so setzt der Bewegungsdämpfer 7 einer Verschwenkbewegung des Bedienhebels 1 um die Achse 2 einen sehr hohen Widerstand entgegen, d.h. an das Bedienelement 1 wird dann nur eine große Gegenkraft angelegt bzw. eine Betätigung des Bedienelements 1 kann sogar im wesentlichen unterbunden bzw. das Bedienelement 1 kann sogar nahezu blockiert werden.

Selbstverständlich sind Abwandlungen vom beschriebenen Ausführungsbeispiel möglich. Beispielsweise kann als Dämpfer-Fluid bzw. Hydraulikmedium eine magnetorestriktive Flüssigkeit verwendet werden und der Strömungswiderstand 7g als eine von einer Spule umschlossene Drossel ausgebildet sein; daneben können eine Vielzahl weiterer Details insbesondere konstruktiver Art durchaus abweichend vom gezeigten Ausführungsbeispiel gestaltet sein, ohne den Inhalt der Patentansprüche zu verlassen.

## Patentansprüche

1. Bedienelement (1) für ein Stellorgan mit einer Vorrichtung (5) zur Kraftrückkopplung, insbesondere für ein Kraftfahrzeug, sowie mit einer zusätzlichen Behinderungseinrichtung zur Einschränkung der Freigängigkeit des Bedienelements (1),
**dadurch gekennzeichnet, dass** die zusätzliche Behinderungseinrichtung für besondere Betriebszustände zur erheblichen Einschränkung der Freigängigkeit des Bedienelements (1.)gezielt zuschaltbar ist.

2. Bedienelement, insbesondere Hand-Bedienelement für ein Fahrzeug-Lenksystem, nach Anspruch 1,
**dadurch gekennzeichnet, dass** die Vorrichtung (5) zur Kraftrückkopplung einen Elektromotor (5b) mit Getriebe (5a) aufweist und eine variable Gegenkraft aufbringen kann, deren Maximalbetrag nennenswert niedriger ist als die durch die Behinderungseinrichtung aufbringbare Gegenkraft.

3. Bedienelement nach Anspruch 1 oder 2,
**dadurch gekennzeichnet, dass** die Behinderungseinrichtung in Form eines Bewegungsdämpfers (7) mit stark veränderbarer Dämpfungskraft ausgebildet ist.

4. Bedienelement nach Anspruch 3,
**dadurch gekennzeichnet, dass** ein über einen Hebel (6) letztlich mit dem Bedienelement (1) verbundener Dämpferkolben (7b) des Bewegungsdämpfers (7) zwei im Dämpferzylinder (7c) vorgesehene Dämpferkammern (7d, 7e) voneinander trennt, die unter Zwischenschaltung eines variablen Strömungswiderstandes (7g) hydraulisch miteinander verbunden sind.

## Claims

1. An operating element (1) for a control unit comprising a force feedback device (5), especially for a vehicle, and an additional obstructing device for restricting the mobility of the operating element (1), **characterised in that** the additional obstructing device can be switched on in controlled manner in order considerably to restrict the mobility of the operating element (1) under special operating conditions.

2. An operating element, especially a manual operating element for a vehicle steering system, according to claim 1,
**characterised in that** the force feedback device (5) comprises an electric motor (5b) and a gear unit (5a) and can apply a variable counterforce, the maximum of which is considerably lower than the counterforce which can be applied by the obstructing device.

3. An operating element according to claim 1 or 2, **characterised in that** the obstructing device is constructed in the form of a motion absorber (7) with a widely variable damping force.

4. An operating element according to claim 3, **characterised in that** a damper piston (7b) of the motion absorber (7), connected ultimately to the operating element (1) via a lever (6), separates two damping chambers (7d, 7e) in a damping cylinder (7c), hydraulically connected to one another with interposition of a variable flow resistor (7g).

## Revendications

1. Elément de réglage (1) pour un actionneur avec un dispositif de rétroaction (5), en particulier pour un véhicule automobile, ainsi qu'avec un dispositif d'empêchement supplémentaire pour limiter la mobilité de l'élément de réglage (1),
**caractérisé en ce que**
le dispositif d'empêchement supplémentaire peut être enclenché de manière sélective pour des situations de fonctionnement particulières, en vue de limiter sensiblement la mobilité de l'élément de réglage (1).

2. Elément de réglage, en particulier élément de réglage manuel pour un système de direction de véhicule, selon la revendication 1,
**caractérisé en ce que**
le dispositif de rétroaction (5) présente un moteur électrique (5b) avec engrenage (5a) et peut appliquer une force opposée variable, dont la valeur maximale est sensiblement inférieure à la force opposée applicable par le dispositif d'empêchement.

3. Elément de réglage selon la revendication 1 ou 2,
**caractérisé en ce que**
le dispositif d'empêchement est réalisé sous la forme d'un amortisseur de mouvement (7) avec une force d'amortissement fortement variable.

4. Elément de réglage selon la revendication 3,
**caractérisé en ce qu'**
un piston d'amortisseur (7b) de l'amortisseur de mouvement (7), raccordé finalement à l'élément de réglage (1) par un levier (6), sépare l'une de l'autre deux chambres d'amortisseur (7d, 7e) prévues dans le cylindre d'amortisseur (7c), elles sont raccordées hydrauliquement l'une à l'autre avec interposition d'une résistance à l'écoulement variable (7g).
